# EUROPEAN PATENT APPLICATION

(11) **EP 2 621 179 A1**
(43) Date of publication of application: **31.07.2013**
(21) Application number: 12195494.5
(22) Date of filing: 04.12.2012
(51) Int. Cl.: H04N 13/04

(54) **Display apparatus and method for providing multi-view thereof**

(30) Priority: 30.01.2012 KR 20120009269; 13.11.2012 KR 20120128187
(71) Applicant: Samsung Electronics Co., Ltd., Gyeonggi-do 443-742 (KR)
(72) Inventor: Lee, Da-young, Gyeonggi-do (KR)
(74) Representative: Robinson, Ian Michael

(57) **Abstract**

A display apparatus and a multi-view providing method are provided. The display apparatus includes a signal processing unit for constructing an image frame of first image content; a display unit for displaying the image frame on a screen; a user command input unit for receiving a user input of a multi-view mode start command; and a control unit for, when the multi-view mode start command is received, displaying second image content by generating a sub-screen in the screen, and when the second image content displayed in the sub-screen is selected, controlling the signal processing unit and the display unit to operate in a multi-view mode in which a plurality of content views are displayed by combining an image frame of the first image content and an image frame of the second image content.

## Description

### CROSS-REFERENCE TO RELATED APPLICATIONS

This application claims priority under 35 U.S.C. § 119 (a) from Korean Patent Application No. 10-2012-0009269 filed on January 30, 2012 and Korean Patent Application No. 10- 2012-0128187 filed on November 13, 2012, in the Korean Intellectual Property Office.

### BACKGROUND

### 1. Field

Apparatuses and methods consistent with exemplary embodiments relate to a display apparatus and a method for providing a multi-view thereof. More particularly, apparatuses and methods relate to a display apparatus for providing a multi-view mode to provide different content images to a plurality of users, and a multi-view providing method thereof.

### 2. Description of the Related Art

In accordance with advance of electronic technologies, various electronic products are developed and supplied. Particularly, display devices such as TV, mobile phone, PC, notebook PC, and PDA are widely used in many households.

As the use of the display devices is increasing, user demands for more various functions are also increase. Hence, manufacturers exert more efforts to meet those user demands, and products with totally new functions such as 3D content provision are emerging.

Recently, a display device for providing a multi-view mode allowing a plurality of users to view different contents by providing multiple contents at the same time is under development.

In such a display device, since the user selects the multiple contents on a single display screen, the user cannot check the multiple contents at the same time and the image viewed by the user can be interrupted.

### SUMMARY

According to the present invention there is provided an apparatus and method as set forth in the appended claims. Other features of the invention will be apparent from the dependent claims, and the description which follows.

One or more exemplary embodiments may solve the above-mentioned and/or other problems and disadvantages. One or more exemplary embodiments may provide a display apparatus for, when a multi-view mode start command is input, displaying other content to be selected by a user by generating a sub-screen in a display screen so that the user can simultaneously check a plurality of contents to select and view the image without interruption, and a multi-view providing method using the same.

According to an aspect of an exemplary embodiment, a display apparatus includes a signal processing unit for constructing an image frame of first image content; a display unit for displaying the image frame on a screen; a user command input unit for receiving a multi-view mode start command; and a control unit for, when the multi-view mode start command is received, displaying second image content by generating a sub-screen in the screen, and when the second image content displayed in the sub-screen is selected, controlling the signal processing unit and the display unit to operate in a multi-view mode in which a plurality of content views are displayed by combining an image frame of the first image content and an image frame of the second image content.

When a content change command for the sub-screen is input while the sub-screen displays the second image content, the control unit may control the signal processing unit and the display unit to change the second mage content displayed in the sub-screen.

The display apparatus may further include a synchronization signal generation unit for generating a synchronization signal which synchronizes a glasses apparatus according to a display timing of the image frame of the first image content and the image frame of the second image content selected, and sending the generated synchronization signal to the glasses apparatus. The control unit may control the signal processing unit and the display unit to alternately combine and display the image frame of the first image content and the image frame of the second image content, on a frame-by-frame basis to correspond to the synchronization signal.

When a multi-view mode end command is input, the control unit may control the signal processing unit and the display unit to close the multi-view mode and to enter a screen mode which displays the first image content in a main screen and displays the second image content in the sub-screen.

The control unit may control the signal processing unit and the display unit to remove the sub-screen when the first image content displayed in the main screen is selected in the changed screen mode, and to display the second image content in the main screen and to remove the sub-screen when the second image content displayed in the sub-screen is selected.

The number of the sub-screens may vary according to a type of the multi-view.

The sub-screen may be one of Picture in Picture (PIP) and Picture by Picture (PBP).

According to an aspect of another exemplary embodiment, a method for providing a multi-view includes displaying an image frame of first image content on a screen; when a multi-view mode start command is input, displaying second image content by generating a sub-screen in the screen; and when the second image content displayed in the sub-screen is selected, operating in a multi-view mode which displays a plurality of content views by combining an image frame of the first image content and an image frame of the second image content selected.

The operating operation may include when a content change command for the sub-screen is input while the sub-screen displays the second image content, changing the second image content displayed in the sub-screen.

The method may further include generating a synchronization signal which synchronizes a glasses apparatus according to a display timing of the image frame of the first image content and the image frame of the second image content selected, and sending the generated synchronization signal to the glasses apparatus. The operating operation may alternately combine and display the image frame of the first image content and the image frame of the second image content selected, on a frame basis to correspond to the synchronization signal.

The method may further include when a multi-view mode end command is input, closing the multi-view mode and entering a screen mode which displays the first image content in a main screen and displays the other content in the sub-screen.

The method may further include removing the sub-screen when the first image content displayed in the main screen is selected in the mode entering operation, and displaying the second image content in the main screen and removing the sub-screen when the second image content displayed in the sub-screen is selected.

The number of the sub-screens may vary according to a type of the multi-view.

The sub-screen may be one of PIP and PBP.

### BRIEF DESCRIPTION OF THE DRAWINGS

These and/or other exemplary aspects and advantages will become apparent and more readily appreciated from the following description of exemplary embodiments, taken in conjunction with the accompanying drawings in which:

FIGS. 1A and 1B are conceptual diagrams of a content providing system according to an exemplary embodiment;

FIG. 2 is a block diagram of a display apparatus according to an embodiment;

FIGS. 3A through 3E are diagrams of a process for entering a multi-view mode according to an exemplary embodiment;

FIGS. 4A, 4B and 4C are diagrams of the process for entering the multi-view mode according to another exemplary embodiment;

FIGS. 5A through 5D are diagrams of a process for releasing the multi-view mode according to an exemplary embodiment;

FIG. 6 is a flowchart of a method for providing the multi-view mode of the display apparatus according to an exemplary embodiment; and

FIG. 7A and 7B are diagrams illustrating the multi-view mode according to an exemplary embodiment.

### DETAILED DESCRIPTION OF EXEMPLARY EMBODIMENTS

Reference will now be made in detail to exemplary embodiments, which are illustrated in the accompanying drawings, wherein like reference numerals refer to the like elements throughout.

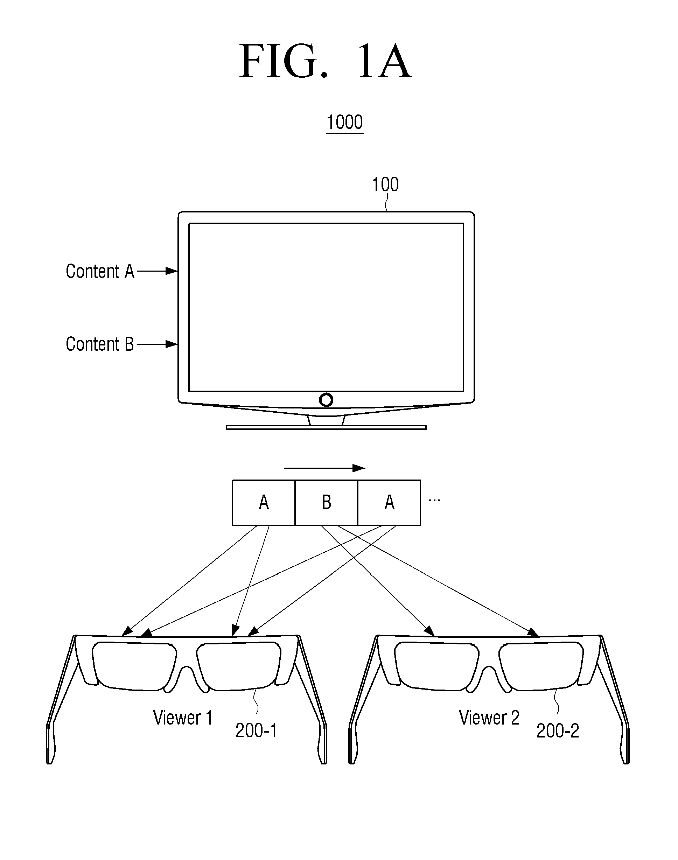

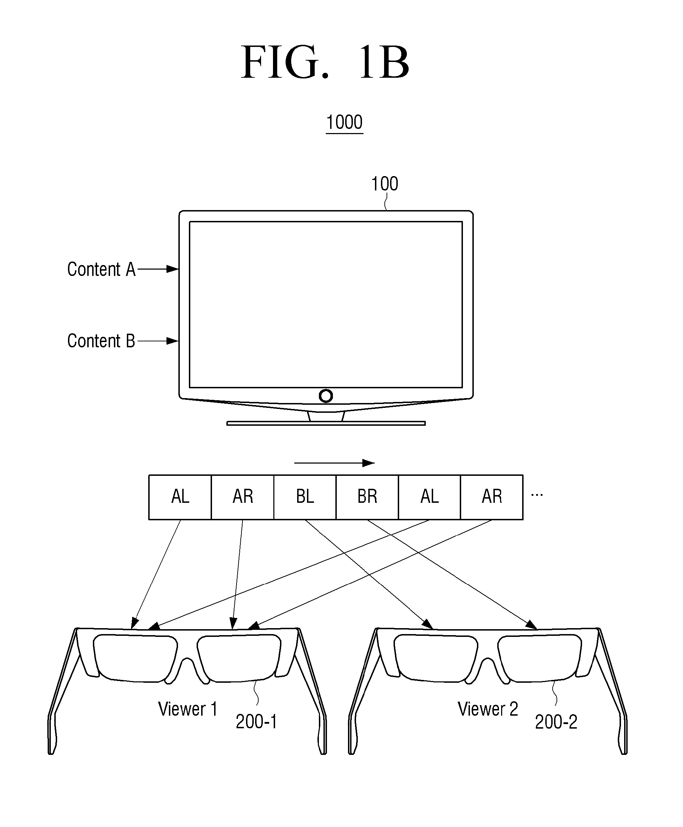

FIGS. 1A and 1B are conceptual diagrams of a content providing system according to an exemplary embodiment. As shown in FIGS. 1A and 1B, the content providing system 1000 includes a display apparatus 100 and a glasses apparatus 200.

FIG. 1A depicts a method for providing a plurality of 2D contents according to an exemplary embodiment.

The display apparatus 100 alternately displays a plurality of 2D contents A and B, generates a synchronization signal for synchronizing first and second glasses apparatuses 200-1 and 200-2 corresponding to the respective contents, and sends the generated synchronization signal to the glasses apparatuses 200-1 and 200-2.

According to the synchronization signal, the first glasses apparatus 200-1 opens all of a left shutter glasses and a right shutter glasses when one content A is displayed, and closes all of the left shutter glasses and the right shutter glasses when the other content B is displayed. Hence, a first viewer wearing the first glasses apparatus 200-1 can view only one content A synchronized with the first glasses apparatus 200-1 among the plurality of the contents A and B alternately displayed. Likewise, a second viewer wearing the second glasses apparatus 200-2 can view only the content B.

FIG. 1B depicts a method for providing a plurality of 3D contents according to an exemplary embodiment.

With a plurality of 3D contents A and B, the display apparatus 100 can alternately display the 3D contents A and B and alternately display a left-eye image and a right-eye image of the 3D content.

For example, the display apparatus 100 can display the left-eye image AL and the right-eye image AR of the 3D content A, and alternately display the left-eye image BL and the right-eye image BR of the 3D content B. In this case, the first glasses apparatus 200-1 can open the left and right glasses when the left-eye image AL and the right-eye image AR of the 3D content A are displayed, and the second glasses apparatus 200-2 can open the left and right glasses when the left-eye image BL and the right-eye image BR of the 3D content B are displayed.

Thus, the first viewer wearing the first glasses apparatus 200-1 can view only the 3D content A, and the second viewer wearing the second glasses apparatus 200-2 can view only the 3D content B.

Herein, shutter glasses are explained by way of example. Those skilled in the art shall understand that polarized glasses can support the multi-view mode by matching a polarization direction of the contents and a polarization direction of the first and second glasses apparatuses.

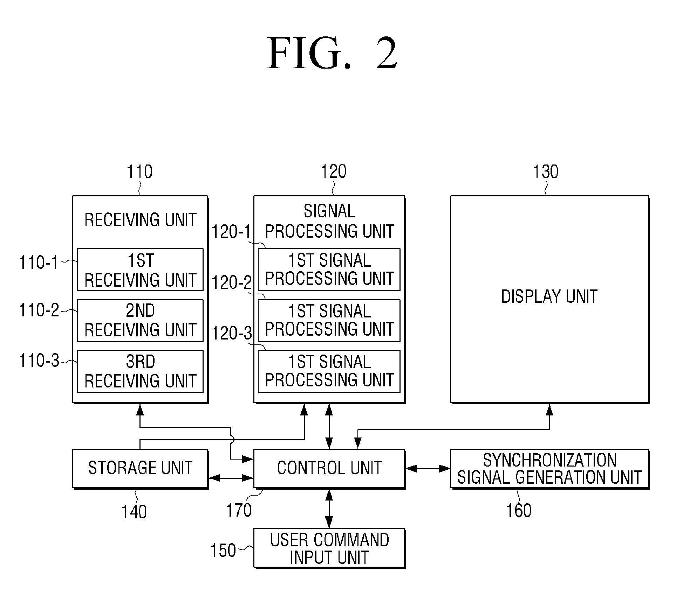

Now, the display apparatus 100 is further explained by referring to FIG. 2.

The display apparatus 100 of FIG. 2 includes a receiving unit 110, a signal processing unit 120, a display unit 130, a storage unit 140, a user command input unit 150, a synchronization signal generation unit 160, and a control unit 170. The display apparatus 100 of FIG. 2 can be implemented using various devices including a display unit such as TV, mobile phone, PDA, notebook PC, monitor, tablet PC, e-book, digital frame, and kiosk.

The receiving unit 110 receives image contents from various sources. Particularly, a plurality of receiving units 110 can be provided, and the receiving units 110-1, 110-2, and 110-3 receive the image contents from various sources according to the multi-view mode.

In more detail, the receiving units 110-1, 110-2, and 110-3 receive the image content from a broadcasting station which transmits broadcasting contents using a broadcasting network or from a web server which transmits image contents using Internet. The receiving units 110-1, 110-2, and 110-3 may receive the image contents from various recording medium players embedded in the display apparatus 100 or connected to the display apparatus 100. The recording medium player indicates a device for playing the contents stored to various recording media such as CD, DVD, hard disc, Blu-ray disc, memory card, and USB memory.

When receiving the image content from the broadcasting station, the receiving units 110-1, 110-2, and 110-3 can include a tuner (not shown), a demodulator (not shown), an equalizer (not shown), and so on. By contrast, when receiving the image content from a source such as web server, the receiving units 110-1, 110-2, and 110-3 can be implemented using a network interface card (not shown). When receiving the image content from various recording media players, the receiving units 110-1, 110-2, and 110-3 can be implemented using an interface unit (not shown) connected to the recording medium player. As such, the receiving units 110-1, 110-2, and 110-3 can be realized variously according to the implementations.

The receiving units 110-1, 110-2, and 110-3 do not have to receive the image contents from the sources of the same type, and may receive the image contents from different sources. For example, the first receiving unit 110-1 and the second receiving unit 110-2 may include the tuner, the demodulator, and the equalizer, and meanwhile the third receiving unit 110-3 may include the network interface card.

While three receiving units 110 are described in FIG. 2 by way of example, any suitable other number of the receiving units 110 can be provided instead.

The signal processing unit 120 processes an image signal of the image content received at the receiving unit 110. Like the receiving unit 110, a plurality of the signal processing units 120 can be implemented.

The signal processing units 120-1, 120-2 and 120-3 can construct an image frame by processing the image contents received at the receiving units 110-1, 110-2 and 110-3.

In detail, the signal processing units 120-1, 120-2 and 120-3 signal-process video data of the image contents received from the receiving units 110-1, 110-2, and 110-3. The signal processing units 120-1, 120-2 and 120-3 each can include a decoder (not shown) for decoding the video data, and a scaler (not shown) for upscaling or downscaling the video data based on a screen size of the display unit 130.

The signal processing units 120-1, 120-2 and 120-3 convert a frame rate of the image contents to a multi-content display rate based on an output rate of the display apparatus 100. For example, according to National Television System Committee (NTSC), the frame rate displayable by the display apparatus 100 can be 60 frames per second. Hence, the signal processing units 120-1, 120-2 and 120-3 convert the frame rate of the content to 60Hz.

While three signal processing units 120 are explained in FIG. 2 for illustration, any suitable number of signal processing units, can be provided.

The display unit 130 alternately arranges and displays the image frames of the contents generated by the signal processing units 120-1, 120-2 and 120-3. In detail, the display unit 130 multiplexes and displays the image frames of the contents fed from the signal processing units 120-1, 120-2 and 120-3 so as to alternately arrange them one by one at fewest. In some cases, the display unit 130 may upscale or downscale the image frame of the content in accordance with the screen size.

The storage unit 140 can store various programs and data for driving the display apparatus 100. The storage unit 140 can store the image contents and output the image content to the signal processing unit 120 according to a user command.

The user command input unit 150 receives a user command for controlling the display apparatus 100. The user command input unit 150 can be implemented using, but not limited to, an input device such as remote control and touch screen.

In particular, the user command input unit 150 can receive a multi-view start command, a content selection command, a multi-view end command, and the like.

The synchronization signal generation unit 160 generates a synchronization signal for synchronizing the glasses apparatus according to the display timing of the image frames of the multiple contents, and sends the generated synchronization signal to the external glasses apparatuses 200-1 and 200-2.

The control unit 170 controls the display apparatus 100 according to the user command input through the user command input unit 150. In particular, when the multi-view mode start command is input, the control unit 170 displays the other content by generating the sub-screen in the screen of the display unit 130. When the other content displayed in the sub-screen is selected, the control unit 170 controls the signal processing units 120-1, 120-2 and 120-3 and the display unit 130 to operate in the multi-view mode which displays a plurality of content views by combining the image frame of the content and the image frame of the other content selected.

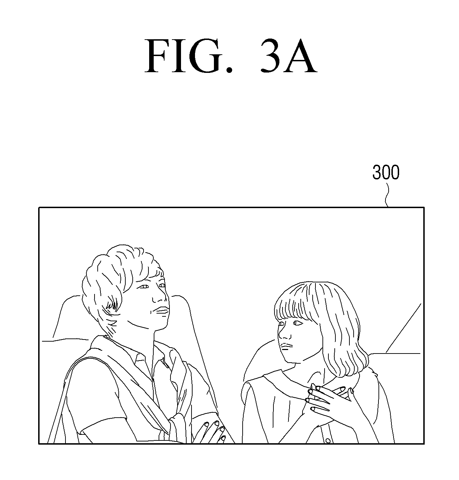

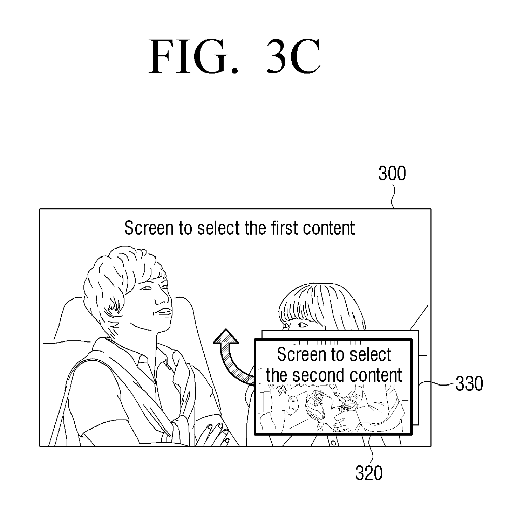

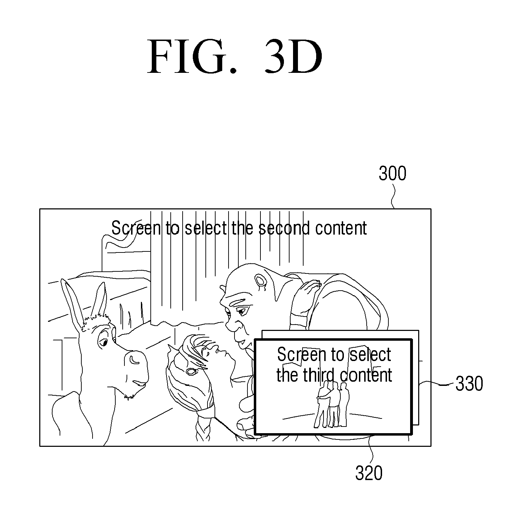

More specifically, the control unit 170 displays the image content input from one of the receiving units 110-1, 110-2, and 110-3 in a main screen 300 of the display unit 130 as shown in FIG. 3A.

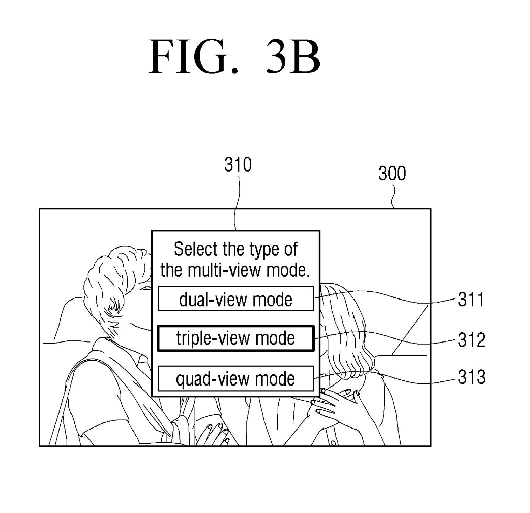

When the multi-view start command is input through the user command input unit 150, the control unit 170 displays a UI 310 for selecting a type of the multi-view mode in the display unit 130 as shown in FIG. 3B. The UI 310 displays the types of the multi-view mode according to the number of the contents displayed alternately. For example, the UI 310 can include an icon 311 corresponding to a dual-view mode for alternately displaying two contents, an icon 312 corresponding to a triple-view mode for alternately displaying three contents, and an icon 313 corresponding to a quad-view mode for alternately displaying four contents as shown in FIG. 3B. Such icons are mere examples and the UI 310 can include an icon corresponding to the multi-view mode for alternately displaying five or more contents.

While the UI 310 can be used to select the type of the multi-view mode by way of example, the type of the multi-view mode can be selected using a remote control and other input device. Alternatively, when the multi-view mode is the default in the display apparatus 100, the selection of the multi-view mode type can be omitted. For example, when the dual-view mode is the default of the multi-view mode in the display apparatus 100, the selection of the multi-view mode type can be omitted.

The control unit 170 generates at least one sub-screen according to the selected type of the multi-view mode.

When the triple-view mode is selected in the UI 310, the control unit 170 generates two sub-screens 320 and 330 in the form of Picture in Picture (PIP) on the main screen 300 of the display unit 130. The main screen 300 is used to select a first content alternately displayed, the first sub-screen 320 is used to select a second content alternately displayed, and the second sub-screen 330 is used to select a third content alternately displayed.

When the content change command for the first sub-screen 320 is input while the first sub-screen 320 displays the content, the control unit 170 can control the receiving unit 110, the signal processing unit 120, and the display unit 130 to change the content displayed on the first sub-screen 320 to other content. For example, when the content change command for the first sub-screen 320 is input while the first sub-screen 320 displays the broadcasting content of a channel number 11, the control unit 170 can control the receiving unit 110, the signal processing unit 120, and the display unit 130 to change the content displayed on the first sub-screen 320 to the broadcasting content of a channel number 10.

The control unit 170 can highlight the screen corresponding to the content to be selected by the user among the first, second and third contents. That is, when the second content is selected, the control unit 170 can highlight and display the first sub-screen 320. By moving the highlight according to the user command, the control unit 170 can highlight the screen corresponding to the content to be selected by the user.

When the user inputs movement commands of the main screen 300, the first sub-screen 320, and the second sub-screen 330 to select other content, the control unit 170 can change the main screen 300 to a screen for selecting the second content, change the first sub-screen 320 to a screen for selecting the third content, and change the second sub-screen 330 to a screen for selecting the first content.

When the plurality of the contents is selected as above, the control unit 170 alternately combines and displays image frames of the plurality of the selected contents on the frame basis to correspond to the synchronization signal generated by the synchronization signal generation unit 160.

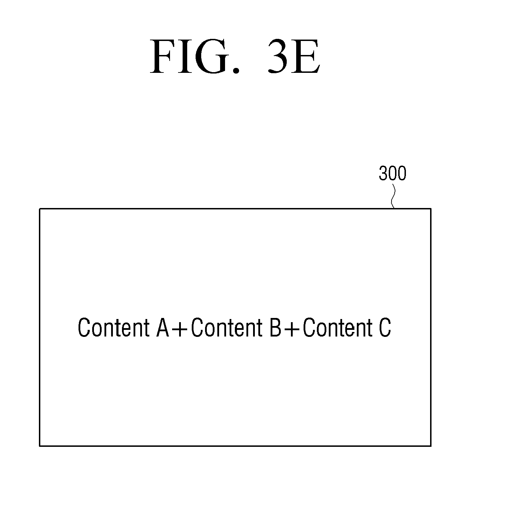

For example, when a content A is selected as the first content, a content B is selected as the second content, a content C is selected as the third content, and a multi-view selection complete command is input, the control unit 130 alternately combines and displays the content A, the content B, and the content C as shown in FIG. 3E.

As described above, in one example embodiment the PIP is used as the sub-screen for selecting the second content and the third content. In another example embodiment, the sub-screen can use Picture by Picture (PBP).

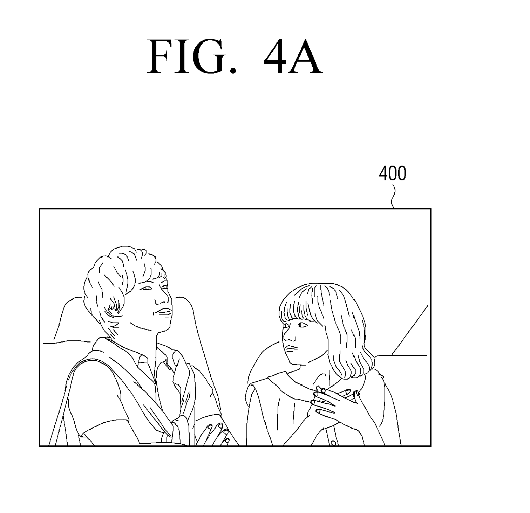

In detail, the control unit 170 displays the image content input from one of the receiving units 110-1, 110-2, and 110-3 in a main screen 400 of the display unit 130 as shown in FIG. 4A.

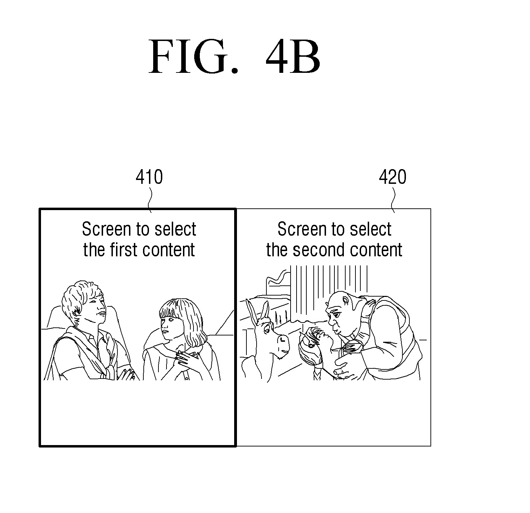

When a dual-view mode start command is input, the control unit 170 displays a first split screen 410 and a second split screen 420 on the display unit 130 as shown in FIG. 4B. The first split screen 410 is used to select the first content and the second split screen 420 is used to select the second content by way of example. When the multi-view mode for alternately displaying three or more contents is selected, the split screens corresponding to the number of the contents can be generated. When three or more split screens are generated, the size of the split screens may differ.

When the first split screen 410 is highlighted as shown in FIG. 4B and the content change command is input, the control unit 170 can control the receiving unit 110, the signal processing unit 120, and the display unit 130 to change the content displayed in the first split screen 320 to other content.

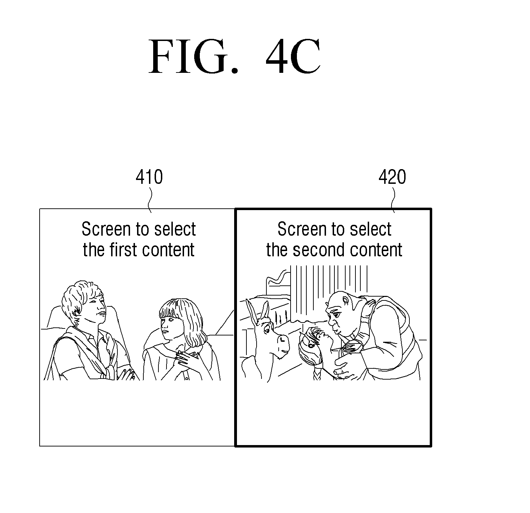

When the highlight movement command is input, the control unit 170 can highlight the second split screen 420 for selecting the second content as shown in FIG. 4C.

As such, by selecting the image content to view in the multi-view mode using the sub-screen or the split screen, the users can check the plurality of the contents to select at the same time and view the current image without interruption.

When the multi-view end command is input during the multi-view mode, the control unit 170 controls the signal processing unit 120 and the display unit 130 to close the multi-view mode, to display the content in the main screen, and to display the other content in the sub-screen. When the content displayed in the main screen is selected in the changed screen, the control unit 170 controls the signal processing unit 120 and the display unit 130 to remove the sub-screen. By contrast, when the other content displayed in the sub-screen is selected, the control unit 170 controls the signal processing unit 120 and the display unit 130 to display the other content in the main screen and to remove the sub-screen.

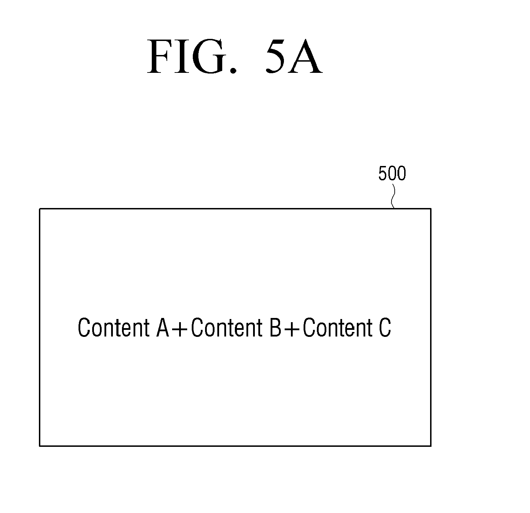

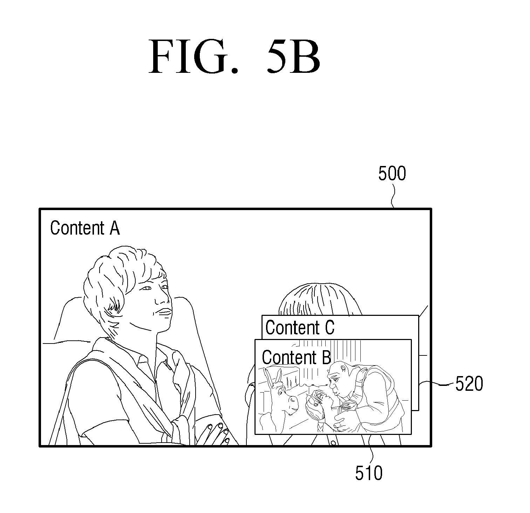

In detail, when the multi-view mode end command is input in the multi-view mode which alternately displays the content A, the content B, and the content C as shown in FIG. 5A, the control unit 170 can close the multi-view mode alternately displaying the plurality of the contents. When the content A is displayed in a main screen 500 and the content B is displayed in a first sub-screen 510 as shown in FIG. 5B, the control unit 170 can change the screen to display the content C in the second sub-screen 520.

When the selection command is input while a particular screen is highlighted, the control unit 170 can display the content corresponding to the highlighted screen in the main screen.

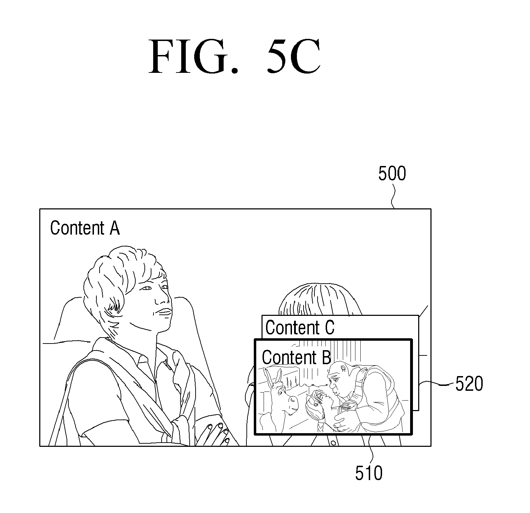

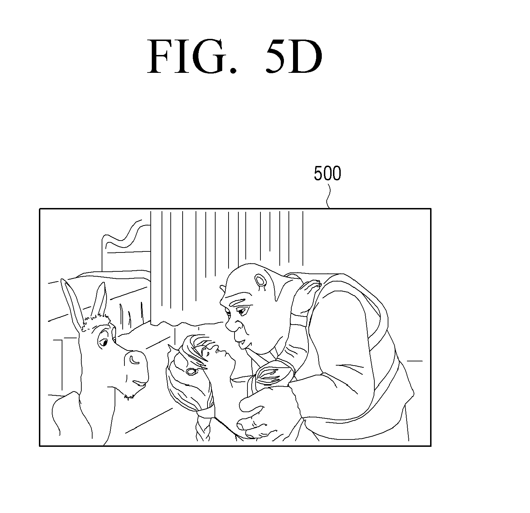

For example, when the main screen 500 is highlighted as shown in FIG. 5B and the highlight movement command is input, the control unit 170 highlights the first sub-screen 510 as shown in FIG. 5C. Next, when the selection command is input, the control unit 170 can display the content B corresponding to the first sub-screen 510 as shown in FIG. 5D.

As such, by closing the multi-view mode and selecting the image content to view from the plurality of the image contents of the multi-view mode, the users can check the plurality of the image contents to select at the same time and view the image content without interruption.

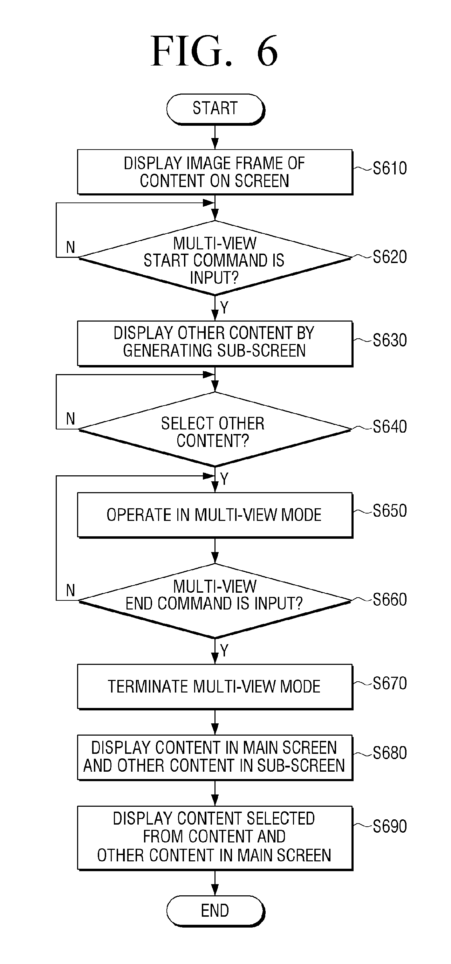

Now, a multi-view providing method of the display apparatus 100 is explained by referring to FIG. 6.

First, the display apparatus 100 displays the image frame of the content on the screen (S610). In so doing, the display apparatus 100 can receive the content from one of the various sources.

The display apparatus 100 determines whether the multi-view start command is input (S620).

When determining that the multi-view start command is input (S620-Y), the display apparatus 100 displays the other content by generating the sub-screen (S630). The number of the generated sub-screens can vary according to the type of the multi-view mode. For example, the single sub-screen can be generated in the dual-view mode, two sub-screens can be generated in the triple-view mode, and three sub-screens can be generated in the quad-view mode.

The display apparatus 100 determines whether the content displayed in the main screen and the other content displayed in the sub-screen are selected (S640).

When the content and the other content are selected (S640-Y), the display apparatus 100 operates in the multi-view mode (S650). In detail, the display apparatus 100 can operate in the multi-view mode by alternately displaying the selected content and other content. In so doing, the selected content and other content can be alternately displayed according to the synchronization signal.

In the multi-view mode, the display apparatus 100 determines whether the multi-view end command is input (S660).

When the multi-view end command is input (S660-Y), the display apparatus 100 closes the multi-view mode (S670), displays the content in the main screen, and displays the other content in the sub-screen (S680).

The display apparatus 100 displays the content selected by the user among the content and the other content, in the main screen (S690).

As set forth above, by providing and terminating the multi-view mode using the sub-screen, the plurality of the users can check the plurality of the contents to select at the same time and view the intended contents without interruption.

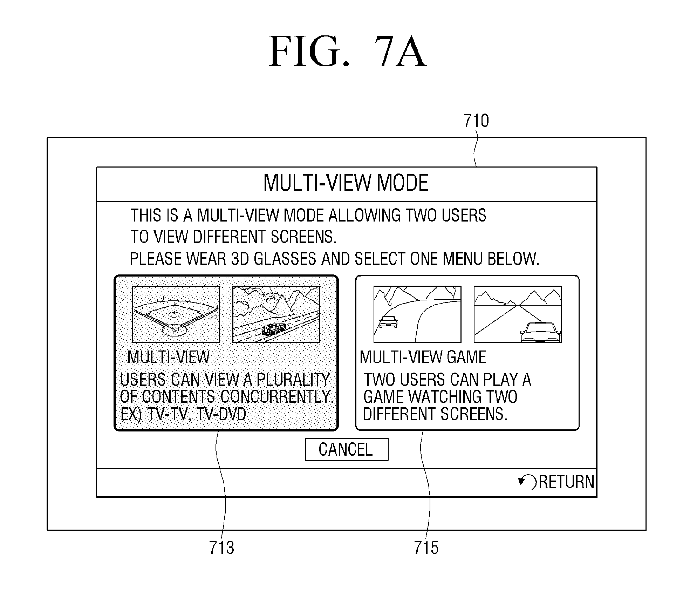

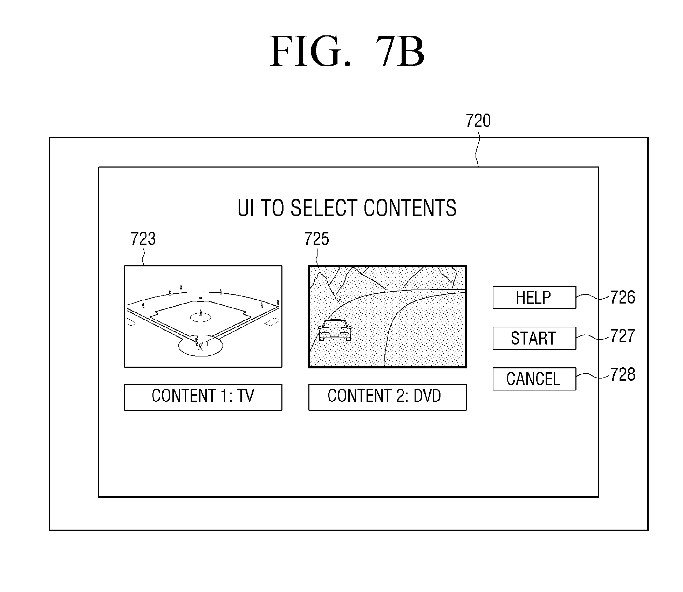

Other exemplary embodiments are explained by referring to FIGS.7A and 7B. Specifically, when the multi-view mode start command is input through the user command input unit 150, the control unit170 controls the display unit 130 to display UI to select contents, in order to select a plurality of contents in a multi-view mode of a display screen. When a plurality of contents are selected through the UI to select contents, the control unit 170 controls the signal processing unit 110 and the display unit 130 to operate in the multi-view mode which displays a plurality of content views by combining the image frame of the content and the image frame of a plurality of content selected.

More specifically, the control unit 170 displays the image content input from one of the receiving units 110-1,110-2, and 110-3 in the display unit 130.

When the multi-view start command is input through the user command input unit 150, the control unit 170 controls the display unit 130 so that the multi-view selection UI(710) can be displayed at the center of the display unit 130 to display multi-view screen or select a game among multi-view games as shown in FIG. 7A.

When an icon 713 is selected for the multi-view mode, the control unit 170 may display a UI 720 to select contents to select a plurality of contents displayed at the center of the display unit 130 in the multi-view mode as shown in FIG 7B. In this case, the UI 720 to select contents may be divided into the first sub-screen 723 to select the first content displayed and the second area 725 to select the second sub-screen in the multi-view mode.

Herein, displaying the UI 720 to select contents at the center of the display screen is explained by way of example. However, the center is a mere example and the UI may be displayed at other areas (for example, upper area). The UI 720 to select contents is divided into the first sub-screen and the second sub-screen, which is a mere example. That is, the UI 720 may be divided into three or more sub-screens to select three or more contents.

The control unit 170 may select a plurality of contents displayed in the multi-view mode according to the user command input through the UI 720 to select contents. In detail, when one screen between the first sub-screen 723 and the second sub-screen 725 is selected through the user command input unit 150, the control unit170 may control the display unit 130 to highlight the selected area. For example, when the second sub-screen 725 is selected through the user command input unit 150, the control unit 170 may control the display unit 130 to highlight the second sub-screen.

When a content change command for the selected areas is input, the control unit 170 may control the display unit 130 to change the content displayed in the selected areas. For example, when the content change command is input after the second sub-screen is selected, the control unit 170 may control the display unit 130 to change the contents displayed in the second sub-screen.

In this case, a content change may be a channel change, which is a mere example. An exemplary embodiment to change an external connector e.g., set top box, DVD, PC, etc., may be included in the technical features of the present invention.

When a plurality of contents are selected through the UI 720 to select contents, the control unit 170 may control the signal processing unit 120 and the display unit 130 to operate in the multi-view mode displaying a plurality of contents view by combining image frames of the plurality of contents selected. In detail, when a user selects a start button 727 including the UI 720 to select contents, the control unit 170 may alternately combine and display image frames of the plurality of the selected contents on the frame basis to correspond to the synchronization signal generated by the synchronization signal generation unit 160.

For example, when the multi-view selection end command is input while content A is selected as the first content and the content B is selected as the second content, the control unit 170 may control the display unit 130 to display the content A and B by alternatively combining the content A and B.

When the multi-view end command is input through the user command input unit 150 during the multi-view mode, the control unit 170 may end the multi-view mode and display a UI to select contents to select one content among the plurality of contents displayed in the multi-view mode. If one content is selected through the UI to select contents generated when a multi-view mode end command is input, the control unit 170 may control the display unit 130 to display the selected contents.

Meanwhile, a program for executing the methods according to various exemplary embodiments can be stored to various recording media.

In detail, codes for executing the methods can be stored to various terminal-readable recording media such as Random Access Memory (RAM), flash memory, Read Only Memory (ROM), Erasable Programmable ROM (EPROM), Electronically Erasable and Programmable ROM (EEPROM), register, hard disc, removable disc, memory card, USB memory, and CD-ROM.

Although the above exemplary embodiments have been described, it will be understood by those skilled in the art that the present inventive concept should not be limited to the described exemplary embodiments, but that various changes and modifications can be made within the scope of the present inventive concept as defined in the claims.

## Claims

1. A display apparatus (100), comprising:
a signal processing unit (120) which is arranged to process at least a first content;
a display screen (130, 300) for displaying an image of the content;
a user command input unit (150) for inputting a multi-view mode start command to operate the display apparatus (100) in a multi-view mode; and
a control unit (170) operable to enable at least one other content to be selected in a sub-screen (320) of the display screen (300), and
after the other content displayed in the sub-screen (320) is selected, the control unit (170) is operable in the multi-view mode to concurrently display a plurality of content views.

2. The display apparatus of claim 1, wherein the other content displayed in the sub-screen (320) can be selected from a plurality of sources including an external media player.

3. The display apparatus of claim 1 or claim 2, wherein the sub-screen (320) is generated in the display screen (300) as a Picture in Picture PIP.

4. The display apparatus of claim 1 or claim 2, wherein the sub-screen (320) is generated in the display screen (300) as a Picture by Picture PBP.

5. The display apparatus of any of claims 1 to 4, wherein, when the multi-view mode start command is input, at least two sub-screens (320, 330) are generated in the display screen (300) to enable at least a first other content and a second other content to be individually selected.

6. The display apparatus of any of claims 1 to 5, wherein, in the multi-view mode, the plurality of views are concurrently displayed on the screen (300) by combining image frames of the first content and the other content.

7. The display apparatus of claim 6, wherein, when a content change command for the sub-screen (320) is input while the sub-screen (320) displays the other content, the control unit (170) controls the signal processing unit (120) to change a channel of the other content as displayed in the sub-screen (320).

8. The display apparatus of claim 6 or 7, further comprising:
a synchronization signal generation unit (160) for generating synchronization signals which synchronize with one or more glasses apparatuses (200) according to a display timing of an image frame of the first content and an image frame of the other content, and for sending the generated synchronization signals to the glasses apparatuses (200), and
wherein the control unit (170) controls the signal processing unit (120) to alternately display an image frame of the first content and an image frame of the other content, on a frame basis to correspond to the synchronization signals.

9. The display apparatus of any preceding claim, wherein, when a multi-view mode end command is input, the control unit (170) controls the signal processing unit (120) to close the multi-view mode and to enter a screen mode which displays the first content in the display screen (300) and displays the other content in the sub-screen (320).

10. The display apparatus of claim 9, wherein the control unit (170) controls the signal processing unit (120) to remove the sub-screen (320) when the first content displayed in the display screen (300) is selected in the changed screen mode, and to display the other content in the display screen (300) and to remove the sub-screen (320) when the other content displayed in the sub-screen (320) is selected.

11. The display apparatus of any of claims 1 to 10, wherein a plurality of the sub-screens (320, 330) are provided, and wherein the number of sub-screens (320, 330) varies according to a type of the multi-view.

12. A method for providing a multi-view, comprising:
displaying an image on a main screen (330);
when a multi-view mode start command is input, generating a sub-screen (320) within the main screen (330);
enabling other content which is displayed by the sub-screen (320) to be selected from a plurality of sources; and
when the other content displayed in the sub-screen (320) is selected, operating in a multi-view mode which displays a plurality of content views concurrently on the main screen (300).

13. The method of claim 12, wherein the plurality of sources from which the other content is selectable include an external media player.

14. The method of claim 12 or claim 13, wherein the sub-screen (320) is generated in the main screen (300) as a Picture in Picture PIP.

15. The method of claim 12 or claim 13, wherein the sub-screen (320) is generated in the main screen (300) as a Picture by Picture PBP.
